# EUROPÄISCHE PATENTSCHRIFT

(11) **EP 0 883 783 B1**
(45) Veröffentlichungstag und Bekanntmachung des Hinweises auf die Patenterteilung: **07.11.2001**
(21) Anmeldenummer: 97903140.8
(22) Anmeldetag: 26.02.1997
(51) Int. Cl.: F24F 6/02

(54) **ANORDNUNG ZUR LUFTBEFEUCHTUNG UND ZUR LUFTWÄSCHE**
ARRANGEMENT FOR AIR HUMIDIFICATION AND FOR AIR WASHING
DISPOSITIF POUR L'HUMIDICATION DE L'AIR ET POUR LE LAVAGE DE L'AIR

(30) Priorität: 27.02.1996 AT 36296
(43) Veröffentlichungstag der Anmeldung: 16.12.1998
(73) Patentinhaber: Muhr, Hans, 1220 Wien (AT)
(72) Erfinder: Muhr, Hans, 1220 Wien (AT)
(74) Vertreter: Müllner, Erwin, Dr.
(86) Internationale Anmeldenummer: AT9700034
(87) Internationale Veröffentlichungsnummer: WO9732166

(56) Entgegenhaltungen:
- DE-A- 2 534 524
- DE-A- 4 329 209
- DE-U- 9 421 327
- DE-U- 29 519 950
- US-A- 4 217 315

## Beschreibung

Die Erfindung betrifft eine Anordnung zur Luftbefeuchtung und zur Luftwäsche in Raumen, mit einem als Skulptur insbesondere aus Stein ausgebildeten Leitkörper für Wasser, an dessen Oberfläche das Wasser von mindestens einer Wasseraustrittsöffnung ausgehend und die Oberfläche des Leitkörpers überflutend, in einen Sammelbehälter abfließt und mittels einer Pumpe im Kreislauf zu der oder den Wasseraustrittsöffnungen wieder hochgepumpt wird, wobei der Leitkörper als ein Hohlkörper mit Ventilationsöffnung ausgebildet ist.

Es sind Luftbefeuchter bekannt, die als beheizte Wasserbehälter ausgebildet sind. Ferner gibt es Ausführungsformen mit Schleuderscheiben oder mit elektronischen Zerstäubungsvorrichtungen, die das Wasser in feinste Teilchen zerlegen.

Aus der AT PS 391 753 B ist eine Einrichtung zur Befeuchtung von Luft bekannt, die aus einem vertikalen Rohrstutzen besteht, in dessen Innerem Wassertropfen wie bei einer Beregnungsanlage gegen einen aufsteigenden Luftstrom in ein Wasserbecken herabfallen, aus dem das gesammelte Wasser wieder hochgepumpt und durch einen Lochboden in Einzeltropfen aufgelöst wird. Diese Einrichtung ist geräuschintensiv, denn die ins Wasser fallenden Tropfen führen zu einem hörbaren Plätschern. Ferner entweicht die mit Feuchtigkeit angereicherte Luft durch den Lochboden eines Wasserbeckens, wobei die aufsteigende Luft durch die Wasserfüllung des Wasserbeckens hindurchperlt. Dabei geht ein Teil der in der Luft gespeicherten Feuchtigkeit wieder verloren.

In die Kategorie der technischen Luftbefeuchter, insbesondere innerhalb der Installation einer Lüftungs- oder Klimaanlage, fällt das in der DE 43 29 209 A1 beschriebene Gerät, welches einen Kessel mit eingebauter Rieselanlage und mit Rieselblechen für Wasser beschreibt, durch welchen Luft geführt wird.

Viele der bekannten Luftbefeuchter sind hygrostatisch geregelt oder besitzen eine Zeitsteuerung. Während die als "Wasserkocher" bezeichneten Geräte der erstgenannten Type zwar lautlos arbeiten, jedoch einen großen Energiebedarf haben, mag die zweite Kategorie im Betrieb zwar kostengünstiger erscheinen, jedoch stören vielfach die Antriebsgeräusche von Motoren für Schleuderscheiben oder Ventilatoren. Daher wurde ein Luftbefeuchter entwickelt, wie er in der AT 373 378 B beschrieben ist, der einen Leitkörper für Wasser mit möglichst großer Oberfläche umfaßt, über welche das Wasser flächendeckend fließt. Der Leitkörper ist in einen Sammelbehälter für Wasser angeordnet, aus welchem eine Pumpe ansaugt und das Wasser durch eine zentrale Bohrung im Leitkörper nach oben fördert. Der Wasserfluß ist so eingestellt, daß die Oberfläche des Leitkörpers ständig überflutet ist, wodurch sich ein sehr guter Verdunstungseffekt ergibt. Zudem wurde der Leitkörper als Steinskulptur von Künstlerhand hergestellt und der Sammelbehälter ebenso aus Stein dem Gesamteindruck ästhetisch angepaßt. Je nach Einstellung der Förderleistung der Pumpe war ein leises Wasserrauschen oder Plätschern vernehmbar, das insbesondere im Bürobereich z.B. in einem Besprechungsraum, Verhandlungssaal oder Wartezimmer eine angenehme, sedierende Wirkung aufwies.

In diesem Sinn beschreibt die DE 25 34 524 A1 einen Luftbefeuchter, der in der Art eines Bildes an der Wand hängt und aus einem Rahmengehäuse besteht, dessen Rückseite von einer räumlich gestalteten, kaskadenartig vorspringenden Wandung gebildet wird. Über die Oberfläche dieser Wandung, die einem Leitkörper darstellt, läuft Wasser, welches im unteren Rahmenbereich in einer Wanne gesammelt und wieder nach oben gepumpt wird. Dieses wasserfallartige Wandbild gibt Feuchtigkeit durch die Rahmenöffnung an den Raum ab. Bei einer Ausführung sind Rahmen und Wandung einstückig ausgebildet, wobei der Eindruck eines Guckkastenbildes mit einem Wasserfall im Hintergrund entsteht.

Die Leistung der natürlichen Oberflächenverdunstung muß einem Raumvolumen genau angepaßt sein. So erfordern sehr große Räume, wie Kassenräume von Banken oder Hotelhallen verhältnismäßig große Leitkörper für das Wasser. Darüber hinaus gibt es Bereiche, die einer besonders intensiven Luftbefeuchtung bedürfen, jedoch ein Freiraum für große Brunnenkonstruktionen nicht zur Verfügung steht. Es ist ferner zu beachten, daß große Verdampfereinheiten mit großen Oberflächen sehr schwer sind und somit in Obergeschoßen von Gebäuden nicht aufgestellt werden können, wenn die Decken- bzw. Bodenkonstruktion des Gebäudes nicht entsprechend verstärkt wurde.

Die Erfindung zielt darauf ab, eine Anordnung zur Luftbefeuchtung und zur Luftwäsche der eingangs beschriebenen Art in ihren Wirkungsgrad zu verbessern. Dies wird dadurch erreicht, daß der Wasserstrom der Wasseraustrittsöffnung bzw. Wasseraustrittsöffnungen in mehrere Teilströme aufgeteilt und ein Teilstrom über die Außenfläche und ein anderer Teilstrom über die Innenfläche des Hohlkörpers geführt ist und daß Ventilationsöffnungen im Fuß- als auch im Kopfbereich des Hohlkörpers vorgesehen sind. Damit steht als Verdunstungsfläche nicht nur die äußere Oberfläche, sondern auch die Innenfläche des Leitkörpers zur Verfügung. Infolge der Ventilationsöffnungen ergibt sich eine Kaminwirkung, welche die im Inneren des Hohlkörpers entwickelte Feuchtigkeit nach außen abführt. Das Wasser fließt an der Innenfläche des Hohlkörpers nach unten, ohne daß damit eine Geräuschentwicklung verbunden ist.

Eine weitere Verbesserung des Feuchtigkeitsüberganges wird dadurch erreicht, daß an der vom Wasserteilstrom überströmten Innenfläche des Hohlkörpers Stufen vorgesehen sind, gegen deren Vorsprünge ein Teil des Wasserteilstromes anläuft und dabei diesen Wasserteilstrom in Tröpfchen zerlegt. Durch die Strukturierung der Innenfläche, z.B. mit Vorsprüngen wie Stufen, kommt es zur Ablösung von Wassertropfen aus der inneren Wasserströmung und zu einer Zerstäubung im Inneren des Hohlkörpers. Eine weitere Verbesserung ist dadurch möglich, daß im Inneren des Hohlkörpers ein Einsatzkörper mit großer benetzbarer Oberfläche, insbesondere ein filterähnliches Drahtgeflecht, vorgesehen ist, welchem an seinem oberen Ende mindestens ein Wasserzulauf gegenüberliegt. Der Einsatzkörper wird brauseähnlich berieselt und die Tropfen und Tröpfchen, auch jene die von der Innenfläche des Hohlkörpers wegspritzen, verteilen sich im Maschengitter über das gesamte Volumen. Im Rahmen der natürlichen Zirkulation tritt befeuchtete Luft aus dem Hohlkörper aus. Das Durchsickern der Wassertröpfchen durch den Einsatzkörper geht sehr langsam vor sich. Eine Geräuschbildung tritt im Gegensatz zu frei in ein Wasserbecken fallenden Wassertropfen nicht auf. Eine Wasserzerstäubung ist im Inneren des Leitkörpers möglich, denn sie erfolgt gewissermaßen gekapselt, wobei kein Wasser aus dem Inneren herausspritzt. In diesem Sinn ist es auch vorteilhaft, im Inneren des Hohlkörpers von diesem schalldämmend umschlossen Zerstäubungsdüsen, ein an sich bekannter Ventilator eine Wärmequelle, und insbesondere auch eine UV-Lichtquelle zur Entkeimung, vorgesehen ist. Neben einer stützenden Anordnung ergibt sich dadurch auch eine optimale Raumausnutzung sowie die bereits erwähnte Geräuschdämpfung. Die Zerstäubungs- bzw. Vernebelungsdüsen liegen in einer Druckleitung einer Pumpe, beispielsweise der Förderpumpe, die das Wasser aus dem Sammelbehälter bis zum höchsten Punkt des Leitkörpers hinaufpumpt. Die natürliche Zirkulation im Inneren des Hohlkörpers und aus diesem heraus kann durch eine Wärmequelle forciert werden. Eine UV-Lichtquelle sorgt ferner für die Entkeimung. Die aufsteigende Wärme wirkt sich günstig auf die Zirkulation aus und forciert den Verdampfungseffekt des Wassers. Besonders vorteilhaft ist ein im Inneren des Hohlkörpers angeordneter elektrischer Ventilator, dessen Antrieb gekapselt ist. Die Luftströmung reißt die Wasserpartikel mit sich und fördert die feuchte Luft nach außen. Eine Luftströmung etwa in einer Druckleitung kann auch direkt mit einer Wasserdüse kombiniert werden, wodurch sich ein feiner Zerstäubungseffekt ergibt.

Wie erwähnt, fördert eine Pumpe das Wasser aus einem wannenartigen Sammelbehälter, in welchem der gesamte Leitkörper angeordnet ist, zum höchsten Punkt des Leitkörpers hinauf, wo der Wasserstrom aus einer oder mehreren Öffnungen austritt. Es ist vorteilhaft, daß der Wasserstrom der Wasseraustrittsöffnungen in mehrere Teilströme aufgeteilt und ein Teilstrom über die Außenfläche und ein anderer Teilstrom über die Innenfläche des Hohlkörpers geführt ist. Die Wasseraustrittsöffnungen können in einer kalottenartigen Deckelplatte vorgesehen sein, die den Leitkörper nach oben abschließt und bei deren Entfernung der Innenraum des Hohlkörpers freiliegt, sodaß beispielsweise der Einsatzkörper zu Wartungszwecken entnommen werden kann. Der Rand der Deckelplatte liegt über einer Rinne, die rund um den Leitkörper herumläuft. Das über den Deckel zufließende Wasser gelangt in die Rinne und wird durch Ausnehmungen am Leitkörper einmal nach außen und einmal nach innen geführt. Zwischen den Ausnehmungen liegt der Dekkel auf. Die Ausnehmungen dienen ferner als Ventilationsöffnungen.

Eine besondere Ausführungsform ist dadurch gekennzeichnet, daß eine elektronische zeit- und bzw. oder luftfeuchtigkeitsabhängige Regelung vorgesehen ist, die die Wasserverteilung auf die einzelnen Wasserströme über Magnetventile, den Zulauf zu eventuellen Zerstäubungs- oder Vernebelungsdüsen, den Stromkreis zu der Wärmequelle sowie zum Ventilator sowie zu einer oder mehreren Pumpen steuert. So kann bei einer Anordnung zur Luftbefeuchtung, die beispielsweise in der Kassenhalle einer Bank aufgestellt ist in der Nacht auf volle Leistung geschaltet werden, da eine eventuelle Geräuschentwicklung durch einen Ventilator nicht stört. Während des Tages vermeidet die Steuerung die Inbetriebnahme surrender Aggregate. Es wird die Wärmequelle zugeschaltet, wenn hoher Luftfeuchtigkeitsbedarf besteht oder es wird die nachts erreichte Luftfeuchtigkeit bloß durch den inneren Kreislauf längs der Wand des Hohlkörpers aufrecht erhalten. Hingegen wird ein leises Plätschern etwa durch Abtropfen des Einsatzkörpers meist als angenehm empfunden, sodaß die Berieselung desselben bei Bedarf auch tagsüber zugeschaltet werden kann. Diese Auswahl wird zeit- und luftfeuchtigkeitsabhängig ("bedarfsabhängig") von der Regelung getroffen.

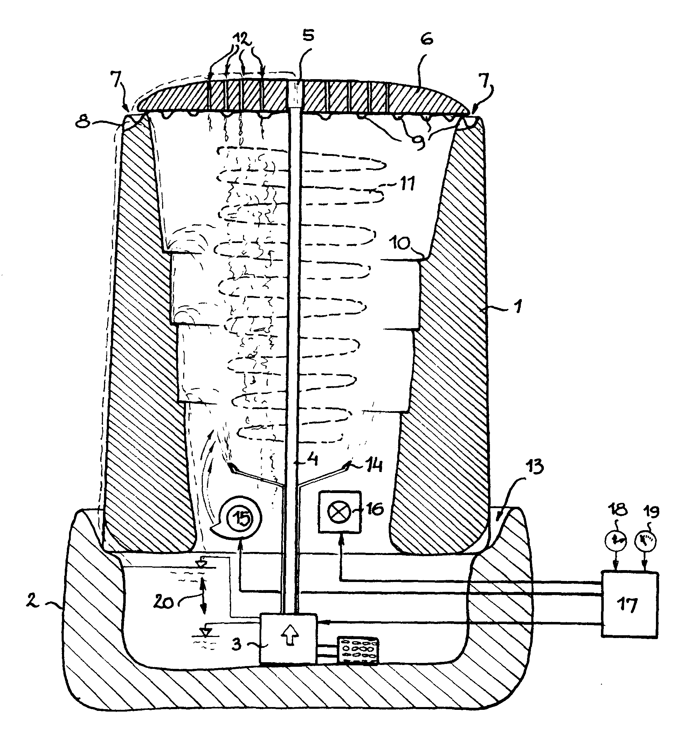

Ein Ausführungsbeispiel einer erfindungsgemäßen Anordnung zur Luftbefeuchtung ist in der Zeichnung im Schnitt dargestellt.

Ein Leitkörper 1 für Wasser ist in einem Sammelbehälter 2 so positioniert, daß das Wasser, welches mittels einer Pumpe 3 durch eine Leitung 4 zu einer Wasseraustrittsöffnung 5 in einer Deckelplatte 6 hochgefördert wird, über die Oberfläche des Leitkörpers 1 wieder in den Sammelbehälter 2 gelangt. Der Leitkörper 1 ist hier als Steinskulptur ausgeführt, die jede beliebige Form haben kann, sofern sie eine Oberfläche aufweist, auf welcher ein möglichst geschlossener Wassermantel, filmartig die Oberfläche benetzend, entlang- und abrinnen kann. Dabei ist der Leitkörper 1 als Hohlkörper ausgebildet. Ein Wasserstrom, der von der Wasseraustrittsöffnung 5 kommt, wird geteilt und ein Teilstrom fließt an der Außenfläche und ein anderer Teilstrom an der Innenfläche des hohlen Leitkörpers 1 entlang. Die Teilung des Wasserstromes wird hier dadurch erreicht, daß der Leitkörper 1 an seiner oberen Berandung eine umlaufende Rinne 7 mit abwechselnd zur Außenfläche und zur Innenfläche des Leitkörpers 1 gerichteten Ausnehmungen 8, 9 aufweist. Das über die Deckelplatte 6 zufließende Wasser gelangt in die Rinne 7 und teilt sich infolge der Ausnehmungen 8, 9 in die zwei in Rede stehenden Teilströme. Die Ausnehmungen 8, 9 wirken gleichzeitig als Ventilationsöffnungen (oben) ebenso die Wasserrücklauföffnungen 13 (unten).

Es stehen also zwei Verdampfungsflächen am Leitkörper 1 zur Verfügung. Während die Außenflächen des Leitkörpers 1 glatt sind, um ein Spritzen zu vermeiden, weist die Innenfläche Stufen 10 auf, die ein solches Spritzen des ablaufenden Wassers im Inneren des Hohlkörpers bewirken. Diese Turbulenzen tragen zur Erhöhung des Wirkungsgrades der Anlage bei.

Im Inneren des Leitkörpers 1 befindet sich ein Einsatzkörper 11, der als kompaktes Drahtgeflecht ausgebildet ist oder auch übereinander angeordnete Lochblechsiebe aufweisen kann. Über Bohrungen 12 in der Deckelplatte 6 wird der Einsatzkörper 11 berieselt. Die Wassertröpfchen von oben bzw. Seitlich von den Stufen 10 abspritzend, werden immer kleiner und feiner und werden so andauernd von der im Inneren des Leitkörpers 1 zirkulierenden Luft aufgenommen. Gleichzeitig wird diese Luft noch durch Feuchtigkeitsaufnahme aus den Innenwasserflächen intensiv angereichert und nach außen an die Raumluft abgegeben. Die Zirkulation der Luft durch den mit Wasserpartikel erfüllten Innenraum des Leitkörpers 1 führt zu einer intensiven Luftfilterwirkung und zur Luftwäsche.

Ergänzend können noch Vernebelungs- oder Sprühdüsen 14 zur Wasserzerstäubung vorgesehen sein, die über Druckleitungen mit der Pumpe 3 in Verbindung stehen. Ein Ventilator 15 unterstützt die Zirkulation. Des gleichen ist eine Wärmequelle 16 (z.B. ein UV-Licht) vorgesehen, die sich günstig auf die Zirkulation auswirkt.

Eine Regelung 17 steht mit einer Zeitschaltuhr 18 und einem Hygrometer 19 in Verbindung. Ferner ist ein Niveaufühler 20 für den Wasserstand vorgesehen. Die Regelung 17 schaltet die Pumpe 3 ein und steuert die Drehzahl bzw. Förderleistung, sie aktiviert den Ventilator 15, die Spritzdüsen 14 und die Beheizung 16. Dies alles in Abhängigkeit von der Uhrzeit und der vorhandenen Luftfeuchtigkeit. Dabei achtet die Steuerung darauf, untertags nur leise Aggregate einzuschalten, während in der Nacht auch leicht surrende Aggregate zugeschaltet werden können. Es sind natürlich Anwendungen denkbar, bei welchen die Nachtruhe eingehalten werden muß. Dann ist eine Geräuschentwicklung während gewisser Tageszeiten akzeptabel. Die Anordnung kann auch dort, wo hohe Luftfeuchtigkeiten benötigt werden bzw. in sehr trockener Umgebung, verhältnismäßig klein gehalten werden, da sie gegenüber der bekannten Ausführung einen wesentlich gesteigerten Wirkungsgrad besitzt. Wenn die Bauelemente im Inneren des Hohlkörpers angeordnet sind, dann ergibt sich eine sehr kompakte Ausführung mit hoher Geräuschdämpfung.

## Patentansprüche

1. Anordnung zur Luftbefeuchtung und zur Luftwäsche in Räumen, mit einem als Skulptur insbesondere aus Stein ausgebildeten Leitkörper (1) für Wasser, an dessen Oberfläche das Wasser von mindestens einer Wasseraustrittsöffnung (5) ausgehend und die Oberfläche des Leitkörpers (1) überflutend, in einen Sammelbehälter (2) abfließt und mittels einer Pumpe (3) im Kreislauf zu der oder den Wasseraustrittsöffnungen (5) wieder hochgepumpt wird, wobei der Leitkörper (1) als ein Hohlkörper mit Ventilationsöffnung ausgebildet ist, **dadurch gekennzeichnet, daß** der Wasserstrom der Wasseraustrittsöffnung bzw. Wasseraustrittsöffnungen (5) in mehrere Teilströme aufgeteilt und ein Teilstrom über die Außenfläche und ein, anderer Teilstrom über die Innenfläche des Hohlkörpers geführt ist und daß Ventilationsöffnungen im Fuß- als auch im Kopfbereich des Hohlkörpers vorgesehen sind.

2. Anordnung nach Anspruch 1, **dadurch gekennzeichnet, daß** an der vom Wasserteilstrom überströmten Innenfläche des Hohlkörpers Stufen (10) vorgesehen sind, gegen deren Vorsprünge ein Teil des Wasserteilstromes anläuft und dabei diesen Wasserteilstrom in Tröpfchen zerlegt.

3. Anordnung nach den Ansprüchen 1 oder 2, **dadurch gekennzeichnet, daß** im Inneren des Hohlkörpers ein Einsatzkörper (11) mit großer benetzbarer Oberfläche, insbesondere ein filterähnliches Drahtgeflecht, vorgesehen ist, welchem an seinem oberen Ende mindestens ein Wasserzulauf (12) gegenüberliegt.

4. Anordnung nach einem der Ansprüche 1 bis 3, **dadurch gekennzeichnet, daß** im Inneren des Hohlkörpers von diesem schalldämmend umschlossen Zerstäubungsdüsen (14), ein an sich bekannter Ventilator (15) eine Wärmequelle (16) und insbesondere auch eine UV-Lichtquelle zur Entkeimung, vorgesehen sind.

5. Anordnung nach einem der Ansprüche 1 bis 4, **dadurch gekennzeichnet, daß** eine elektronische zeit- und bzw. oder luftfeuchtigkeitsabhägige Regelung (17) vorgesehen ist, die die Wasserverteilung auf die einzelnen Wasserströme über Magnetventile, den Zulauf zu eventuellen Zerstäubungs- oder Vernebelungsdüsen (14), den Stromkreis zu der Wärmequelle (16) sowie zu dem Ventilator (15) und zu einer oder mehreren Pumpen (3) steuert.

## Claims

1. Arrangement for air humidification and air washing in rooms, with a water guide structure (1) formed as a sculpture, particularly of stone, on the surface of which the water emanating from at least one water outlet opening (5) and streaming over the surface of the guide structure (1) runs off into a collection container (2) and is recirculated by a pump (3) to the water outlet opening or openings (5), the guide structure (1) being formed as a hollow structure with ventilation opening, **characterized in that** the flow of water from the water outlet opening or openings (5) is divided into a plurality of part flows and one part flow is guided over the outer surface, and another part flow over the inner surface, of the hollow structure, and **in that** ventilation openings are provided in the base area, and also in the crown area, of the hollow structure.

2. Arrangement according to Claim 1, **characterized in that** steps (10), on to the projecting part of which a part of the part flow impinges and is broken up into droplets, are provided on the inner surface traversed by the part flow.

3. Arrangement according to Claim 1 or 2, **characterized in that** an insert structure (11) with a large wettable surface area, in particular a filter-like wire mesh, is provided in the interior of the hollow structure, with at least one water feed (12) opposite its upper end.

4. Arrangement according to any one of Claims 1 to 3, **characterized in that** atomizing nozzles (14), a blower (15) known in itself, a heat source (16), and in particular also a germicidal ultraviolet light source, are provided in the interior of the hollow structure and surrounded thereby in a soundproof manner.

5. Arrangement according to any one of Claims 1 to 4, **characterized in that** an electronic time- and/or humidity-governed automatic control (17) is provided which controls the water distribution to the individual flows by solenoid valves, the feed to atomizing or nebulizing nozzles (14) if any, and the power circuit to the heat source (16) and to the blower (15) and to one or more pumps (3).

## Revendications

1. Dispositif pour l'humidification d'air et pour le lavage de l'air dans des espaces munis de corps conducteurs de l'eau (1) réalisés sous forme d'une sculpture, en particulier en pierre, sur la surface desquels de l'eau s'écoule en sortant d'au moins une ouverture de sortie d'eau (5) en submergeant la surface du corps conducteur (1), l'eau étant à nouveau mise en circulation par pompage au moyen d'une pompe (3) du circuit vers l'une ou l'autre des ouvertures de sortie d'eau (5), le corps conducteur (1) étant réalisé sous forme de corps creux avec des ouvertures de ventilation, **caractérisé en ce que** le débit d'eau sortant de l'ouverture de sortie d'eau, ou des ouvertures de sortie d'eau (5) est divisé en plusieurs flux partiels et **en ce qu'**un flux partiel est conduit sur la surface extérieure du corps creux et un autre flux partiel est conduit sur la surface intérieure du corps creux et **en ce que** les ouvertures de ventilation sont prévues dans la zone de pied ainsi qu'également dans la zone de tête du corps creux.

2. Dispositif selon la revendication 1, **caractérisé en ce que** des gradins sont prévus sur les surfaces intérieures du corps creux submergées par un flux partiel d'eau, une partie du flux partiel d'eau s'écoulant contre les saillies de ces surfaces et ce flux partiel d'eau se divisant ainsi en gouttelettes.

3. Dispositif selon les revendications 1 ou 2, **caractérisé en ce qu'**un corps d'introduction (11) est disposé à l'intérieur du corps creux avec une grande surface mouillable, en particulier sous forme de grille en fil similaire à un filtre, au moins une évacuation d'eau (12) étant placée à l'opposé du corps d'introduction à son extrémité supérieure.

4. Dispositif selon l'une des revendications 1 à 3, **caractérisé en ce qu'**à l'intérieur du corps creux sont prévus : des buses de pulvérisation (14) entourées par le corps creux en assurant une isolation phonique, un ventilateur connu en soi (15), une source de chaleur (16) et en particulier également une source de lumière ultraviolette pour la désinfection.

5. Dispositif selon l'une des revendications 1 à 4, **caractérisé en ce qu'**est prévue une régulation électronique (17) en fonction du temps et/ou de l'humidité de l'air, qui régule : la répartition d'eau sur les flux d'eau unitaires par des électrovalves, le débit vers d'éventuelles buses de pulvérisation ou de nébulisation (14), le circuit électrique vers la source de chaleur (16) ainsi que vers le ventilateur (15) et vers une ou plusieurs pompes (3).
